# EUROPEAN PATENT APPLICATION

(11) **EP 4 730 226 A1**
(43) Date of publication of application: **22.04.2026**
(21) Application number: 25208200.3
(22) Date of filing: 13.10.2025
(51) Int. Cl.: G06Q 10/06, G06Q 10/10, H04N 7/18, H04N 23/661, H04N 23/90

(54) **INFORMATION PROCESSING APPARATUS, CONTROL METHOD THEREOF, SYSTEM, PROGRAM, AND STORAGE MEDIUM**

(30) Priority: 16.10.2024 JP 2024181232
(71) Applicant: Canon Kabushiki Kaisha, Tokyo, 146-8501 (JP)
(72) Inventor: TASHIRO, Daichi, Tokyo 146-8501 (JP)
(74) Representative: TBK

(57) **Abstract**

An information processing apparatus which is linked to a first image capturing apparatus, comprises: first receiving means configured to receive an image capturing plan that uses the first image capturing apparatus from a management apparatus that manages information on a plurality of image capturing apparatuses; second receiving means configured to receive, from the first image capturing apparatus, dynamic information of the first image capturing apparatus that changes regardless of an operation by a user; determination means configured to determine whether or not to transmit the dynamic information to the management apparatus using the image capturing plan and the dynamic information; and transmission means configured to transmit the dynamic information to the management apparatus in a case where the determination means determines to transmit the dynamic information.

## Description

### TECHNICAL FIELD

The present disclosure relates to an information processing apparatus and a control method thereof, system, program, and storage medium, and more specifically to a technology that supports linking of image data with news-gathering activities plans.

### BACKGROUND

Conventionally, when conducting news-gathering activities, a news-gathering activity support system has been provided in which a planner plans in advance equipment to be used for the news-gathering activities, such as cameras, reporters, location of the news-gathering activities, date and time, the content, etc., and the plan is shared between the planner and the reporters, allowing the news-gathering activities to be conducted efficiently.

Furthermore, in a news-gathering activity support system, it is required to display dynamic information that changes regardless of user operations, such as camera location information and power supply information, so that planners can select cameras that are appropriate for the location and situation of news-gathering activities when planning the news-gathering activities. For example, by selecting a camera located close to the location of news-gathering activities, and by selecting a camera with a large battery capacity for news-gathering activities in a distant location, it is possible to support the efficiency of news-gathering activities by allocating cameras appropriate for the news-gathering activities in the news-gathering activity plans

### SUMMARY

In Japanese Patent No. 7020429, the latest dynamic information of the camera is sent to the news-gathering activity support system every time the dynamic information of the camera changes. Therefore, in a situation where the dynamic information changes frequently, such as when the location of the camera is moving, the information is sent to the news-gathering activity support system frequently. Such frequent data transmission may cause degradation of the customer's communication environment, excessive power consumption on the transmission equipment, and increased server load of the news-gathering activity support system.

On the other hand, if the frequency of data transmission were uniformly reduced, planners using the news-gathering activity support system might not be able to obtain the latest camera information and might not be able to assign cameras appropriate for the news-gathering activities when planning the news-gathering activities.

This problem is not limited to news-gathering activity plans, but also occurs when images are captured according to predetermined image capturing plans.

The present disclosure has been made in consideration of the above situation, and enables a server managing a plurality of image capturing apparatuses to effectively obtain the latest dynamic information of the plurality of image capturing apparatuses that the server manages while reducing communication costs and power consumption of transmission devices.

The present disclosure in its first aspect provides an information processing apparatus as specified in claim 1. Optional features are specified in claims 2 to 13.

The present disclosure in its second aspect provides a system as specified in claim 14. Optional features are specified in claims 15 to 19.

The present disclosure in its third aspect provides a control method of an information processing apparatus as disclosure in claim 20.

The present disclosure in its fourth aspect provides a program as specified in claim 21.

The present disclosure in its fifth aspect provides a computer-readable storage medium as specified in claim 22.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a block diagram illustrating an example of the configuration of a news-gathering activity support system according to an embodiment of the present disclosure.
FIG. 2 is a block diagram illustrating the functional configuration of a news-gathering activity planning system, a camera management system, and an information processing apparatus used as a camera management terminal according to the embodiment.
FIG. 3A and FIG. 3B are flowcharts of camera dynamic information transmission determination processing according to the embodiment.
FIG. 4 is a sequence diagram illustrating a flow of news-gathering activity planning processing according to the embodiment.
FIG. 5 is a diagram illustrating an example of camera information display according to the embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <System Configuration>

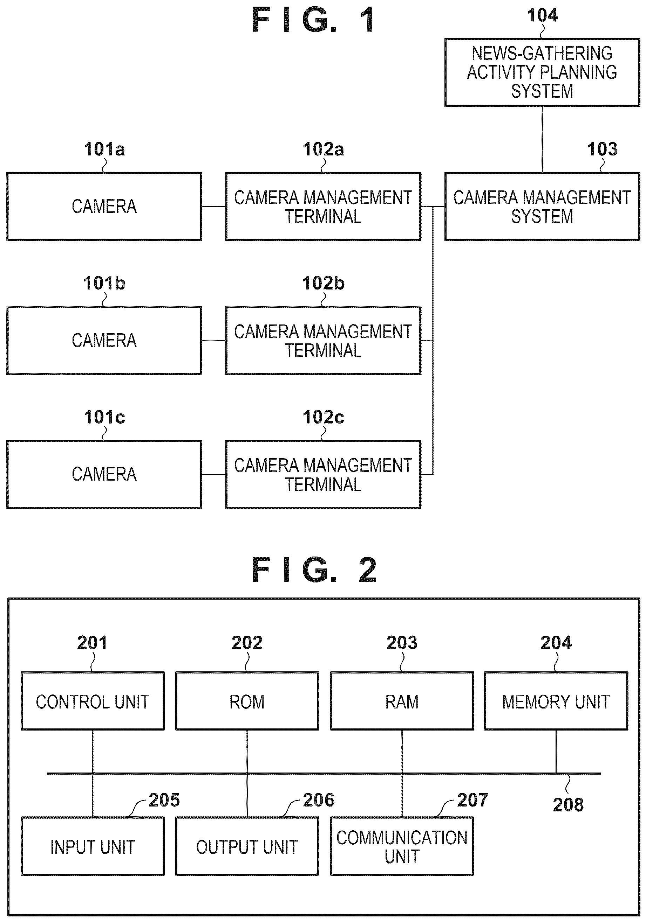

FIG. 1 is a diagram showing an example of the configuration of a news-gathering activity support system in an embodiment of the present disclosure. The news-gathering activity support system includes a plurality of cameras 101a to 101c for capturing images during news-gathering activities. The cameras 101a to 101c may be, for example, image capturing apparatuses such as digital still cameras and digital video cameras, or any electronic devices with image capturing functions. Examples of electronic devices include tablet devices, information processing apparatuses such as personal computers, mobile phones, smartphones, robots, drones, etc. with camera functions.

The news-gathering activity support system includes camera management terminals 102a to 102c, a camera management system 103, and a news-gathering activity planning system 104 to support the linking of the captured image data to the news-gathering activity plans. The image data includes, for example, moving image data. As the camera management terminal 102, for example, an information processing terminal such as a smartphone, a tablet device, or a personal computer (PC) may be used.

FIG. 1 shows three cameras 101a to 101c and three corresponding camera management terminals 102a to 102c, but the present disclosure is not limited to three, and the numbers of camera/cameras and corresponding camera management terminal/terminals may be one, or four or more. In the following explanation, if the camera to be managed is not individually specified, it will be referred to as the camera 101 and the camera management terminal will be referred to as the camera management terminal 102, and if the camera to be managed is individually specified, it will be described as the camera 101a, 101b or 101c and the camera management terminal will be referred to as the camera management terminal 102a, 102b or 102c.

Further, in FIG. 1, the cameras 101a to 101c correspond to the camera management terminals 102a to 102c, respectively, but it is also possible to link a plurality of cameras to one camera management terminal. For example, if a user of a camera management terminal owns a plurality of types of cameras, a planner can create a news-gathering activity plan using the plurality of types of cameras.

In addition, the news-gathering activity planning system 104 allows a planner to view information on the cameras 101 managed by the camera management system 103, and allows the planner to select the camera or cameras 101 to be used in news-gathering activities using the information on the cameras 101.

### <Configuration of Information Processing Apparatus>

FIG. 2 is a block diagram illustrating the general functional configuration of an apparatus used as the camera management terminal 102, the camera management system 103, and the news-gathering activity planning system 104. Actual apparatuses having the configuration shown in FIG. 2 can take various forms, such as PCs, servers, smartphones, and tablet devices, but in this explanation they will be collectively referred to as information processing apparatuses.

In the information processing apparatus shown in FIG. 2, a control unit 201 is, for example, a CPU, which reads out control programs for respective blocks of the information processing apparatus from a ROM 202, and loads programs in a RAM 203 and executes them. In this way, the control unit 201 controls the operation of each block of the information processing apparatus.

The ROM 202 is an electrically erasable and recordable non-volatile memory, and stores the operating programs for the respective blocks of the information processing apparatus as well as parameters etc. required for the operation of each block.

The RAM 203 is a rewritable volatile memory, and is used for loading programs executed by the control unit 201 etc., and for temporarily storing data generated by the operation of each block of the information processing apparatus.

A memory unit 204, together with ROM 202, stores operating programs for each block of the information processing apparatus as well as parameters etc. required for the operation of each block.

An input unit 205 includes an operating member and a connection unit for connecting to an external operating member, and accepts operations by the user.

An output unit 206 includes a display unit and a connection unit for connecting to an external display device.

A communication unit 207 is for communicating with external apparatuses including the cameras 101 and the camera management system 103.

The control unit 201, ROM 202, RAM 203, memory unit 204, input unit 205, output unit 206, and communication unit 207 are connected to one another via a bus 208 and are configured to be operable by an application program.

The control unit 201 reads the OS and application programs from the memory unit 204 or ROM 202, loads them into the RAM 203, and executes them to carry out various processes and realize the functions of this embodiment described below. The application programs cause the image processing apparatus to receive user input from the input unit 205. They also cause the image processing apparatus to output information to the output unit 206 and display the processing results. Further, they also cause the image processing apparatus to communicate with other PCs, servers, devices, etc. connected to the network via the communication unit 207.

### <Processing of Camera Management Terminal 102>

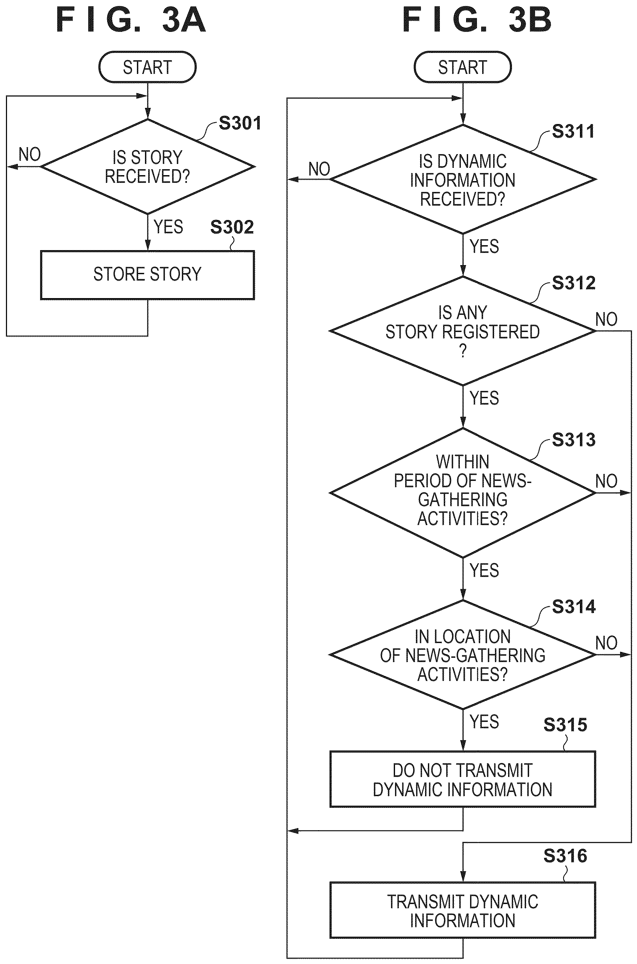

Next, the processing of the camera management terminal 102 in this embodiment will be described. FIGS. 3A and 3B are flowcharts illustrating the processing of the camera management terminal 102 in this embodiment. FIG. 3A shows the processing related to reception of a story transmitted from the camera management system 103, and FIG. 3B shows the processing related to the transmission control of dynamic information, transmitted from the camera 101, which indicates information on the state of the camera 101 that changes regardless of user operations.

First, the processing related to reception of a story transmitted from the camera management system 103 shown in FIG. 3A will be explained.

When a planner registers a news-gathering activity plan in the news-gathering activity planning system 104, the registered news-gathering activity plan is sent to the camera management system 103. A news-gathering activity plan here is planning information for news-gathering activities for one purpose, and includes information such as the date and time of the news-gathering activities (date and time of image capturing operation), the location of the news-gathering activities (location of image capturing operation), and an equipment to be used including a camera. Hereinafter, a registered news-gathering activity plan will be referred to as a story. The camera management system 103 obtains information about the camera to be used in the news-gathering activities from the information on the story, and sends the story to the camera management terminal 102 corresponding to the relevant camera 101.

In step S301, the camera management terminal 102 determines whether or not a story is received from the camera management system 103. If no story is received, the process of step S301 is repeated, and if a story is received, the process proceeds to step S302.

In step S302, the camera management terminal 102 stores the received story in the memory unit 204, and returns to step S301. In this manner, every time a new story is transmitted from the camera management system 103, the camera management terminal 102 stores the story.

Next, referring to FIG. 3B, the processing relating to the transmission control of dynamic information transmitted from the camera 101 will be described.

First, in step S311, the camera management terminal 102 determines whether dynamic information is received from the camera 101. The dynamic information is metadata of the camera 101 that changes dynamically, such as the location information, power source information, and network connection status of the camera 101. The camera 101 repeatedly transmits the dynamic information, and the transmission may be performed each time the dynamic information changes, or at predetermined time intervals. If no dynamic information is received, the determination of step S311 is repeated, and if dynamic information is received, the process proceeds to step S312.

In step S312, the camera management terminal 102 determines whether there is any story stored in the memory unit 204. If there is no stored story, the camera 101 is not scheduled to be used for news-gathering activities, and the process proceeds to step S316. If there is a stored story or stories, the process proceeds to step S313. In steps S313 and S314, it is determined whether any of the stored story or stories is currently being executed.

First, in step S313, for all stored story or stories, date and time of the news-gathering activities for each story is compared with the current time to determine whether or not the current time is within the period of the news-gathering activities of any of the story or stories. In addition, the determination of whether or not the current time is within the period of the news-gathering activities may be performed by setting a certain period (for example, one day) for the date and time of the news-gathering activities, or may be performed based on other data included in the story. If the current time is within the period of the news-gathering activities (within a predetermined range from the date and time of image capturing operation), the process proceeds to step S314, and if the current time is not within the period of the news-gathering activities of any story, the process proceeds to step S316.

In step S314, the location of the news-gathering activities of the story within the period of the news-gathering activities is compared with the location information included in the dynamic information sent from the camera 101 to determine whether the camera 101 is in the location of the news-gathering activities. For example, if the location information of the camera 101 acquired in step S311 matches the location of the news-gathering activities of the story, it is determined that the camera 101 is in the location of the news-gathering activities. The location may be determined based on whether the distance between the location of the camera 101 and the location of the news-gathering activities is shorter than a predetermined threshold, or based on the region to which the camera 101 belongs. The region here is, for example, the range of an area defined by a country or a local government, and may be a prefecture, city, state, and so forth. In this case, the regions where the location information included in information of the camera 101 and the story belong to are determined using map information, and if the regions to which the camera 101 and the story belong are the same or adjacent, it can be determined that the camera 101 is in the location of the news-gathering activities (within a predetermined range from the location of the image capturing operation).

If it is determined in step S314 that the camera 101 is in the location of the news-gathering activities, the process proceeds to step S315, where it is determined not to transmit the dynamic information of the camera 101 to the camera management system 103. In this case, the dynamic information of the camera 101 received in step S311 may be stored in the camera management terminal 102. On the other hand, if it is determined that the camera 101 is not in the location of the news-gathering activities, the process proceeds to step S316, where the dynamic information is transmitted to the camera management system 103.

In a case of transmitting the dynamic information in step S316, if the dynamic information was saved in the camera management terminal 102 in step S315, past dynamic information may be transmitted in addition to the latest dynamic information of the camera.

When the process of step S315 or S316 is completed, the process returns to step S311 and the above processes are repeated.

Note that in the judgments in steps S312 to S314, whether data transmission is necessary or not may be determined using AND conditions as shown in FIG. 3B, or may be determined using OR conditions or only one of the judgments. In addition, if there are periods when data transmission is not performed due to other external factors, such as when the planner's working hours are fixed (outside of predetermined hours), when the planner is logged off from the news-gathering activity planning system 104 based on the planner's login/logoff information, those conditions may be also considered in the determination.

### <Example of Overall Operation of System>

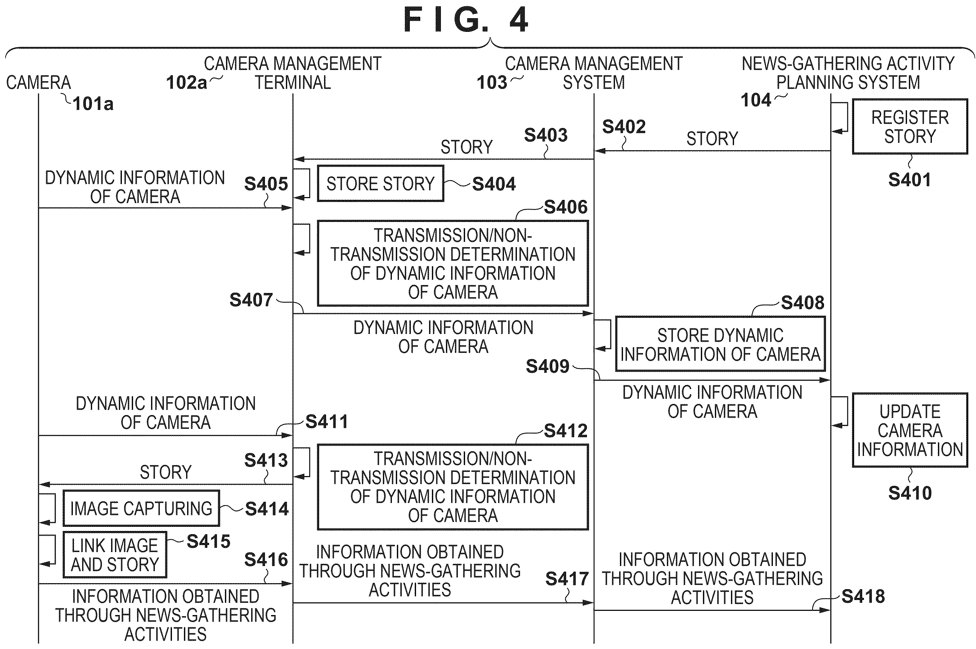

Next, an example of processing in the news-gathering activity support system of this embodiment, including the transmission/non-transmission of the dynamic information described above, will be described with reference to the sequence diagram in FIG. 4. To make the explanation easier to understand, the flow will be described here when one story that uses the camera 101a is registered.

First, in step S401, a planner registers a news-gathering activity plan that uses the camera 101a in the news-gathering activity planning system 104. The news-gathering activity plan here is a piece of planning information related to news-gathering activities, and includes information such as the period and location of the news-gathering activities, and the equipment to be used, including a camera. Hereinafter, the news-gathering activity plan registered in step S401 will be referred to as a story.

Next, in step S402, the news-gathering activity planning system 104 transmits the registered story to the camera management system 103. In step S403, the camera management system 103 obtains information on the equipment to be used in the story obtained in step S402, and transmits this information to the camera management terminal 102a corresponding to the camera 101a. This story is not transmitted to the cameras 101b and 101c. Then, in step S404, the camera management terminal 102a stores the received story in the memory unit 204.

In step S405, the camera 101a transmits its own dynamic information to the camera management terminal 102a. The dynamic information here refers to dynamically changing camera metadata, and includes the location information, power supply information, and network connection status of the camera 101a. Note that the process of step S405 is repeatedly performed regardless of the transmission of stories from the news-gathering activity planning system 104 to the camera management terminal 102a, and the dynamic information of the camera 101a may be transmitted each time the dynamic information changes, or may be transmitted at predetermined intervals.

In step S406, the camera management terminal 102a determines whether or not to transmit the dynamic information of the camera 101a acquired in step S405 to the camera management system 103 based on the story stored in the memory unit 204 in step S404 and the dynamic information transmitted in step S405, etc. Here, the determination is made as described above with reference to FIG. 3B.

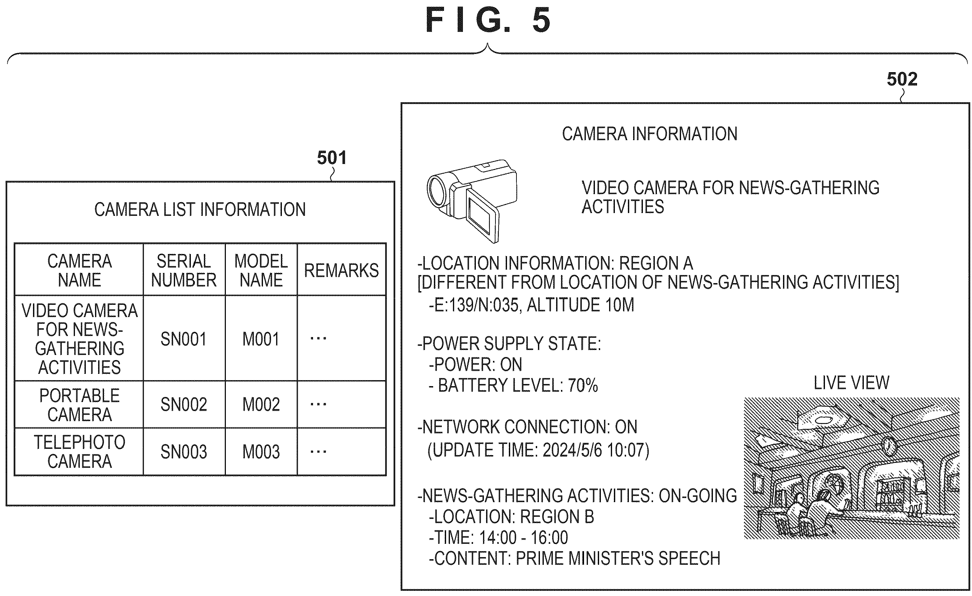

If it is determined in step S406 that the dynamic information is to be transmitted, in step S407 the camera management terminal 102a transmits the dynamic information of the camera 101a to the camera management system 103. Then, in step S408, the camera management system 103 stores the dynamic information of the camera 101a acquired in step S405, and in step S409, the camera management system 103 transmits the dynamic information of the camera 101a stored in step S408 to the news-gathering activity planning system 104. In step S410, the news-gathering activity planning system 104 updates the camera information based on the dynamic information of the camera 101a transmitted in step S409. At this time, the information used in the determination in step S406 may be added and displayed. Details of the display contents will be described later with reference to FIG. 5.

In step S411, the camera 101a again transmits its own dynamic information to the camera management terminal 102a, and in step S412, the camera management terminal 102a determines whether or not to transmit the acquired dynamic information of the camera 101a to the camera management system 103. Again, the camera management terminal 102a makes the determination as described above with reference to FIG. 3B, based on the story stored in the memory unit 204 in step S404 and the dynamic information transmitted in step S411, etc.

If it is determined in step S412 that the dynamic information is not to be transmitted, the camera management terminal 102a does not transmit the dynamic information of the camera 101a to the camera management system 103. At this time, as described above, the dynamic information that is not transmitted may be stored in the camera management terminal 102a.

In step S413, when the date and time of the news-gathering activities of the story stored in the memory unit 204 arrives, the camera management terminal 102a transmits the story to the camera 101a. In step S414, the user uses the camera 101a to capture an image based on the story, and in step S415, the camera 101a links the image data captured in step S414 with the story transmitted in step S413. In this way, by managing the image data for each story, post-image capturing workflow such as editing and broadcasting can be performed more efficiently.

In step S416, the camera 101a transmits image data (images obtained through news-gathering activities) linked to the story to the camera management terminal 102a. In step S417, the camera management terminal 102a transmits the images obtained through the news-gathering activities to the camera management system 103, and in step S418, the camera management system 103 transmits the image obtained through the news-gathering activities to the news-gathering activity planning system 104.

When the news-gathering activities end and the story that uses the camera 101a is completed, the dynamic information of the camera 101a is again sent to the camera management system 103 if no other stories have been registered.

In the above description, the process of transmitting the dynamic information from the camera management system 103 to the news-gathering activity planning system 104 in step S409 has been described as being performed every time the dynamic information is transmitted, but the present disclosure is not limited to this. For example, the process may be performed in response to a request from the planner or the news-gathering activity planning system 104, or may be performed at a predetermined time interval that is longer than the time at which the dynamic information is transmitted from the camera 101a to the camera management terminal 102a.

Similar processing is also performed in the camera management terminals 102b and 102c. However, in the above example, the cameras 101b and 101c are not used, so the dynamic information of the cameras 101b and 101c is transmitted to the camera management system 103 even while the dynamic information of the camera 101a is not being transmitted.

With the above control, if the camera 101 has been reserved and it is assumed that the camera 101 is being used in news-gathering activities for a story, the dynamic information of the camera 101 is not transmitted to the camera management system 103. This makes it possible to suppress data transmission for the camera 101 that is of low importance to the planner as the camera 101 cannot be reserved for a story, or for dynamic information of the camera 101 for which the current situation can be understood even without dynamic information from the contents of news-gathering activities.

### <Display Example of Camera Information>

FIG. 5 is a diagram illustrating a specific example of camera information displayed in step S410. In this example, a display example is shown in a case where a planner checks the statuses of the plurality of cameras 101 at the time of planning a new story on the news-gathering activity planning system 104. A reference numeral 501 indicates an example showing a list of the plurality of cameras 101 managed by the news-gathering activity planning system 104. In this example, the name and model name of each camera 101 are displayed in table format; in addition, dynamic information of the camera acquired in step S308 may also be displayed in the list, or information on a story may also be displayed if a camera is reserved for any news-gathering activities.

When the planner selects the camera 101 in the camera list information 501, detailed information 502 about the camera selected in the camera list information 501 is displayed. In this example, the name of the selected camera 101, and dynamic information such as location information, power supply information, and network connection status, as well as live view captured by the camera, are displayed. In addition, the update time of the dynamic information may be displayed so that the planner can verify the reliability of the dynamic information. Furthermore, if the selected camera 101 is currently used for any news-gathering activities, the contents of the news-gathering activity plan and information about the location of the news-gathering activities based on the determination in step S314 may be displayed. By displaying these information, even if the dynamic information is not updated, the planner can infer the status of the camera 101 from the information on the story. Further, even if there is a difference between the contents of the news-gathering activities and the dynamic information, the planner can recognize the difference at a glance.

As described above, according to this embodiment, by reducing the update frequency of the dynamic information of cameras that are of low importance to the planner because the cameras cannot be reserved or current statuses of the cameras can be known from the contents of news-gathering activities, it is possible to reduce communication costs and power consumption of the terminal without reducing the usability of the planner. Further, by linking and managing the contents of news-gathering activities, the cameras to be used for the news-gathering activities, and the image data captured by the cameras, it is possible to improve the efficiency of the workflow related to news-gathering activities.

In the above embodiment, the camera management system 103 and the news-gathering activity planning system 104 are described as independent apparatuses as shown in FIG. 1, however, they can be configured as a single apparatus. Further, the camera 101 and the camera management terminal 102 can be configured as an integrated device.

In addition, in the above-described embodiment, the camera 101 captures images based on a news-gathering activity plan. However, the present invention can be applied to cases where images are captured according to a predetermined image capturing plan, not limited to news-gathering activities.

### <Other Embodiments>

The present invention may be applied to a system made up of a plurality of devices, or to an apparatus made up of a single device.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus which is linked to a first image capturing apparatus, comprising:
first receiving means configured to receive an image capturing plan that uses the first image capturing apparatus from a management apparatus that manages information on a plurality of image capturing apparatuses;
second receiving means configured to receive, from the first image capturing apparatus, dynamic information of the first image capturing apparatus that changes regardless of an operation by a user;
determination means configured to determine whether or not to transmit the dynamic information to the management apparatus using the image capturing plan and the dynamic information; and
transmission means configured to transmit the dynamic information to the management apparatus in a case where the determination means determines to transmit the dynamic information.

2. The information processing apparatus according to claim 1, wherein the dynamic information includes at least one of location information indicating a location, power information indicating a power state and a network connection status of the first image capturing apparatus.

3. The information processing apparatus according to claim 1 or 2, wherein the determination means determines whether or not the first image capturing apparatus is executing the image capturing plan, and if the first image capturing apparatus is executing the image capturing plan, determines not to transmit the dynamic information.

4. The information processing apparatus according to claim 3, wherein the determination means determines that the first image capturing apparatus is executing the image capturing plan in a case where location information of the first image capturing apparatus included in the dynamic information indicates a location within a predetermined range from an image capturing location indicated in the image capturing plan and a current time is within a predetermined range from image capturing date and time indicated in the image capturing plan.

5. The information processing apparatus according to any one of claims 1 to 4, wherein the determination means further determines not to transmit the dynamic information if a current time is not within a predetermined period of time.

6. The information processing apparatus according to any one of claims 1 to 5, wherein the first receiving means further receives login/logoff information of a planner who creates the image capturing plan from the management apparatus, and
the determination means determines not to transmit the dynamic information if the planner is logged off.

7. The information processing apparatus according to any one of claims 1 to 6, wherein the determination means determines to transmit the dynamic information in a case where the image capturing plan is not received.

8. The information processing apparatus according to any one of claims 1 to 7, wherein the determination means determines to transmit the dynamic information in a case where a current time is not within a predetermined range from image capturing date and time indicated in the image capturing plan.

9. The information processing apparatus according to any one of claims 1 to 8, wherein the determination means determines to transmit the dynamic information in a case where location information of the first image capturing apparatus included in the dynamic information is not within a predetermined range from an image capturing location indicated in the image capturing plan.

10. The information processing apparatus according to any one of claims 1 to 9, wherein the transmission means transmits the dynamic information to the management apparatus when the determination means determines to transmit the dynamic information.

11. The information processing apparatus according to any one of claims 1 to 10, wherein the dynamic information is transmitted at predetermined time intervals.

12. The information processing apparatus according to any one of claims 1 to 10, wherein the dynamic information is transmitted in a case where the dynamic information changes.

13. The information processing apparatus according to any one of claims 1 to 12, wherein the first image capturing apparatus is integrally formed with the information processing apparatus.

14. A system comprising:
the information processing apparatus according to any one of claims 1 to 13;
the management apparatus; and
a planning apparatus configured to be used for planning the image capturing plan.

15. The system according to claim 14, wherein, when the dynamic information is transmitted from the information processing apparatus, the management apparatus transmits the dynamic information to the planning apparatus.

16. The system according to claim 14, wherein the management apparatus stores the dynamic information transmitted from the information processing apparatus, and transmits the dynamic information to the planning apparatus when the planning apparatus requests transmission of the dynamic information.

17. The system according to claim 14, wherein the management apparatus stores the dynamic information transmitted from the information processing apparatus and transmits the dynamic information to the planning apparatus at predetermined time intervals that are longer than time intervals at which the dynamic information is transmitted from the first image capturing apparatus to the information processing apparatus.

18. The system according to any one of claims 14 to 17, wherein
the planning apparatus acquires and displays information about the plurality of image capturing apparatuses from the management apparatus,
in a case where the dynamic information is transmitted from the information processing apparatus, the management apparatus transmits the dynamic information to the planning apparatus, and
the planning apparatus updates and displays the information about the plurality of image capturing apparatuses based on the dynamic information.

19. The system according to claim 14, wherein the management apparatus and the planning apparatus are integrally formed.

20. A control method of an information processing apparatus which is linked to a first image capturing apparatus, comprising:
a receiving step of receiving, from the first image capturing apparatus, dynamic information of the first image capturing apparatus that changes regardless of an operation by a user;
a determination step of, in a case where an image capturing plan that uses the first image capturing apparatus is received from a management apparatus that manages information on a plurality of image capturing apparatuses, determining whether or not to transmit the dynamic information to the management apparatus using the image capturing plan and the dynamic information; and
a transmission step of transmitting the dynamic information to the management apparatus in a case where it is determined to transmit the dynamic information in the determination step.

21. A program comprising instructions which, when the program is executed by a computer, cause the computer to carry out the method of claim 20.

22. A computer-readable storage medium storing the program according to claim 21.
